(19) Europäisches Patentamt

European Patent Office

Office européen des brevets

(11) Veröffentlichungsnummer: **0 244 662 B1**

## EUROPÄISCHE PATENTSCHRIFT

(45) Veröffentlichungstag der Patentschrift: 09.10.91

(51) Int. Cl.⁵: **H04N 5/32, G01T 1/29**

(21) Anmeldenummer: 87105295.7

(22) Anmeldetag: 09.04.87

(54) **Röntgendiagnostikeinrichtung mit Speicherleuchtschirm.**

(30) Priorität: 21.04.86 DE 3613370

(43) Veröffentlichungstag der Anmeldung:
**11.11.87 Patentblatt 87/46**

(45) Bekanntmachung des Hinweises auf die
Patenterteilung:
**09.10.91 Patentblatt 91/41**

(84) Benannte Vertragsstaaten:
**DE FR IT**

(56) Entgegenhaltungen:
**EP-A- 0 176 492**
**WO-A-80/02785**
**DE-A- 3 319 309**

**IEEE TRANSACTIONS ON NUCLEAR SCIEN-
CE, Band NS-19, Nr. 3, Juni 1972, Seiten
34-38, IEEE, New York, US; T. SCHLESINGER
et al.: "Thermoluminescence dosimetry with
photon counting"**

(73) Patentinhaber: **SIEMENS AKTIENGESELL-
SCHAFT**
**Wittelsbacherplatz 2**
**W-8000 München 2(DE)**

(72) Erfinder: **Reinfelder, Hans-Erich, DR.**
**Schuhstrasse 5**
**W-8520 Erlangen(DE)**

## Beschreibung

Die Erfindung betrifft eine Röntgendiagnostikeinrichtung mit einem Röntgenkonverter mit Lumineszenz-Speicherleuchtschirm, der das jeweilige Röntgenstrahlenbild latent speichert, und mit einer Auslesevorrichtung, die zur Bildwiedergabe den Speicherleuchtschirm durch die ausgesandten Strahlen einer zusätzlichen Strahlenquelle zum Leuchten anregt, mit einem Detektor zur Erfassung des vom Speicherleuchtschirm emittierten Lichtes, der eine Umwandlung des ausgelesenen, latent gespeicherten Strahlenbildes in elektrische Signale bewirkt, die auf einem Monitor wiedergegeben werden.

In der EP-A-0 142 645 ist eine derartige Röntgendiagnostikeinrichtung beschrieben, bei der als strahlenempfindlicher Wandler ein Leuchtschirm aus einem Lumineszenz-Speicherleuchtstoff mit Röntgenstrahlen bestrahlt wird, so daß in ihm Defektelektronen erzeugt werden, die in Potentialfallen (Traps) mit höherem Energieniveau gespeichert werden. In einer Auslesevorrichtung wird dieser Speicherleuchtschirm von einer zusätzlichen Strahlenquelle, beispielsweise einem Laser, bildpunktweise abgetastet, so daß die in den Traps gespeicherten Elektronen angeregt werden und in niedrigere Energieniveaus zurückfallen können, wobei die Energiedifferenz in Form eines Lichtquants abgestrahlt wird. Dadurch ist es möglich, das derart gespeicherte Röntgenstrahlenbild auszulesen.

Während der Abtastung einer Zeile durch den Laserstrahl wird das von dem Speicherleuchtschirm emittierte Licht durch eine Lichtleiteroptik erfaßt und auf der lichtempfindlichen Eingangsfläche eines Detektors abgebildet. Das Ausgangssignal des Detektors wird einer normalen Fernsehkette zur Wiedergabe des Röntgenbildes zugeführt.

Der Detektor verwandelt die einzelnen Lichtquanten in ein quasi kontinuierliches Stromsignal. Das Detektorsystem arbeitet dabei so träge, daß eine zeitliche Auflösung der einzelnen Ereignisse nicht ermöglicht und auch nicht gewünscht ist. Das derart erzeugte kontinuierliche Analogsignal wird einem Analog/Digital-Wandler (A/D-Wandler) zugeführt, der die Größe der erzeugten Spannung bzw. des Stromes in eine digitale Zahl umwandelt. Nach anschließender Verarbeitung wird dieses digitale Signal wiederum in einem Digital/Analog-Wandler (D/A-Wandler) in ein analoges Signal umgesetzt, das auf einem Monitor wiedergegeben werden kann. Durch die analoge Verarbeitung, insbesondere durch die Kennlinie des Detektors und des Verstärkers, und die mehrfache Umwandlung entstehen Fehler, die beispielsweise durch eine Eichung beseitigt werden müssen.

In der Zeitschrift "Applied Optics", Januar 1968, Band 7, Nr. 1, Seiten 1 bis 10, ist eine Anordnung beschrieben, bei der das von einer Lichtquelle ausgesandte Licht von einem Photomultiplier empfangen wird, der einen Teil der auf die lichtempfindliche Eingangsfläche fallenden Photonen mit einer gewissen Wahrscheinlichkeit in je einen Impuls umwandelt. Diese Impulse werden durch ein Zeittor einem Diskriminator zur Auswahl der Impulse zwischen zwei Amplitudenhöhen und einem Verstärker und einem Zählregister zugeführt.

Die Erfindung geht von der Aufgabe aus, eine Röntgendiagnostikeinrichtung der eingangs genannten Art zu schaffen, bei der die Erfassung des auf die Eingangsfläche des Detektors fallenden Lichtes direkt, ohne Umwandlung auf digitaler Basis, erfolgt.

Die Aufgabe wird erfindungsgemäß dadurch gelöst, daß der Detektor ein Photomultiplier ist, der eine Impulsfolge erzeugt, deren Impulsrate von der auf die lichtempfindliche Eingangsfläche des Photomultipliers fallenden Helligkeit abhängt, und daß an dem Ausgang des Detektors ein Zähler für die Impulse angeschlossen ist, der bildpunktweise die Impulse des Detektor$ zählt und der über eine Wandlerstufe, die eine Zusammensetzung der einzelnen Zählerwerte zu einem Bildsignal bewirkt, mit dem Monitor verbunden ist. Dieser spezielle, sehr schnelle Photomultiplier erfaßt also die einzelnen, von dem Speicherleuchtschirm emittierten Lichtquanten, deren Anzahl durch den Zähler ermittelt wird, so daß dadurch am Ausgang des Zählers ein der Helligkeit des emittierten Lichtes entsprechendes Signal anliegt, das über einen Wandler auf dem Monitor als helligkeitsmodulierte Bildpunkte wiedergegeben werden kann.

Es hat sich als vorteilhaft erwiesen, wenn der Detektor ein Single-Photon-Photomultiplier ist, der für jedes auf seine lichtempfindliche Eingangsfläche fallende Photon einen Impuls erzeugt. Für eine Anpassung des Photomultipliers an den Zähler hat es sich als vorteilhaft erwiesen, wenn an dem Photomultiplier ein Impulsverstärker angeschlossen ist. Das Rauschen des Photomultipliers und des Impulsverstärkers wird eliminiert, wenn das Ausgangssignal des Photomultipliers einem Impulsdiskriminator zugeführt wird, dessen Ausgang mit dem Eingang des Zählers verbunden ist.

Die Erfindung ist nachfolgend anhand eines in der Zeichnung dargestellten Ausführungsbeispiels näher erläutert. Es zeigen:

Fig. 1     den Aufnahmeteil einer bekannten Röntgendiagnostikeinrichtung,

Fig. 2     den Wiedergabeteil einer bekannten Röntgendiagnostikeinrichtung, und

Fig. 3     die erfindungsgemäße Schaltungsanordnung des Wiedergabeteiles.

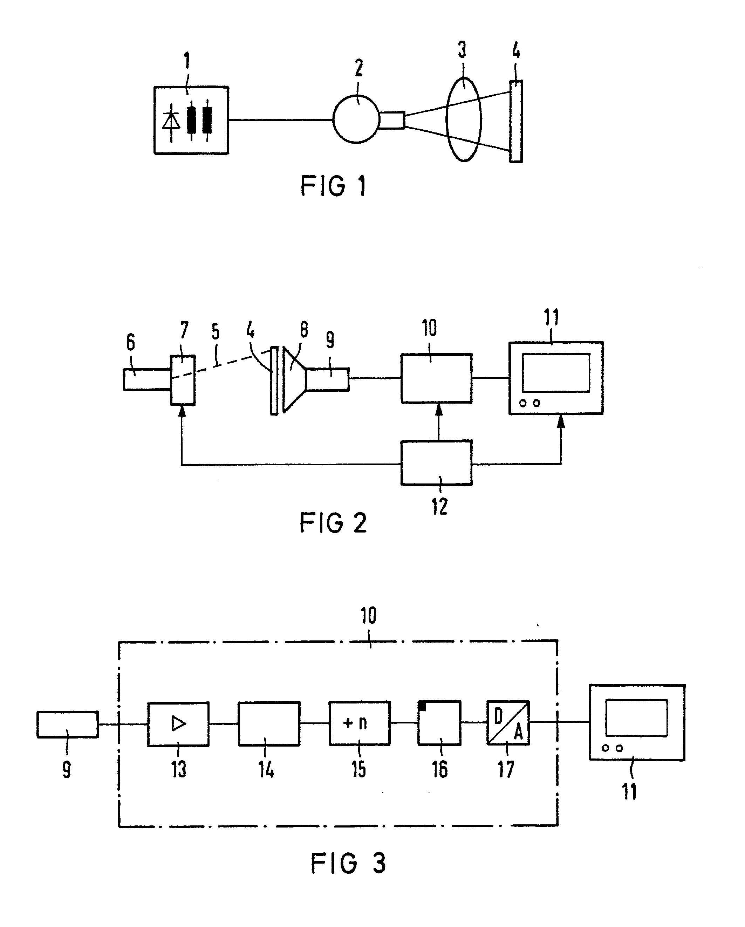

In der Figur 1 ist ein Hochspannungsgenerator 1 dargestellt, der eine Röntgenröhre 2 speist, die Röntgenstrahlen aussendet, die einen Patienten 3 durchdringen. Die durch den Patienten entsprechend seiner Transparenz geschwächten Röntgenstrahlen fallen auf einen Lumineszenz-Speicherleuchtschirm 4. Dieses auffallende Strahlenbild erzeugt in dem Speicherleuchtschirm 4 Defektelektronen, die in einer Potentialfalle des Leuchtstoffes gespeichert werden, so daß in dem Speicherleuchtschirm ein latentes Bild gespeichert ist.

Zur Wiedergabe des latenten Bildes wird der Speicherleuchtschirm 4 von einem Laserstrahl 5 bildpunktweise abgetastet, der von einem Laser 6 erzeugt und von einer Ablenkvorrichtung 7 über die Fläche des Leuchtschirmes 4 zeilenweise abgelenkt wird. Die Ablenkvorrichtung 7 für den Laser 6 kann beispielsweise aus einem Ablenkspiegel für die vertikale und einem elektrooptischen Strahlenablenker für die horizontale Ablenkung bestehen. Die vertikale Ablenkung kann aber auch durch Parallel-Vorschub des Leuchtschirmes 4 senkrecht zur Abtastzeile erreicht werden. Durch die Abtastung mit dem Laserstrahl 5 werden alle auf dem Speicherleuchtschirm 4 liegenden Bildpunkte zeilenweise nacheinander angeregt und zum Leuchten gebracht. Eine Lichtleiteroptik 8 erfaßt das vom Speicherleuchtschirm 4 emittierte Licht und leitet es auf einen lichtelektrischen Wandler 9, der die Helligkeit der abgetasteten Bildpunkte erfaßt und in ein elektrisches Signal umwandelt, das einer Wiedergabeschaltung 10 zugeführt wird, die aus den einzelnen analogen Ausgangssignalen des Wandlers 9 ein Videosignal zur Darstellung auf einem Monitor 11 erzeugt. Die Wiedergabeschaltung 10 kann Bildspeicher, Verarbeitungsschaltungen A/D- und D/A-Wandler enthalten. Eine Steuereinrichtung 12 erzeugt die Steuertakte zur Synchronisation der Ablenkvorrichtung 7, der Wiedergabeschaltung 10 und des Monitors 11.

Diese bekannte Schaltungsanordnung zur Wiedergabe des vom Wandler 9 erhaltenen elektrischen Signales wird nun durch die in Figur 3 dargestellte erfindungsgemäße Schaltungsanordnung ersetzt. Als Wandler 9 wird ein sogenannter Single-Photon-Photomultiplier verwendet, der für jedes auf seine lichtempfindliche Eingangsfläche fallende Lichtquant einen Impuls erzeugt. Die Ausgangsimpulse dieses speziellen Photomultipliers 9 werden als Wiedergabeschaltung 10 einem Impulsverstärker 13 zugeführt, dessen Ausgang mit einem Impulsdiskriminator 14 verbunden ist. Die Ausgangsimpulse des Impulsdiskriminators 14 werden in einem Zähler 15 für jeden Bildpunkt summiert. Der Endstand des Zählers 15 wird in einem dem Bildpunkt zugeordneten Speicherplatz eines Bildspeichers 16 eingeschrieben. An dem Bildspeicher 16 kann eine nicht dargestellte Verarbeitungsschaltung zur Verarbeitung des gespeicherten Bildsignales angeschlossen sein. Der Ausgang des Bildspeichers 16 ist mit einem D/A-Wandler 17 verbunden, dessen Ausgangssignal dem Monitor 11 zur Wiedergabe des in dem Bildspeicher 16 enthaltenen Röntgenbildes zugeführt wird.

Durch den Photomultiplier 9 wird also jedes einzelne Lichtquant erfaßt, das ein impulsförmiges Ausgangssignal des Photomultipliers 9 bewirkt. Diese Impulse werden in dem entsprechend schnellen Impulsverstärker 13 mit hoher Bandbreite verstärkt, so daß die pro Zeitintervall auftretenden Impulse mit einem üblichen schnellen digitalen Zähler 15 erfaßt werden können. Der dem Zähler 15 vorgeschaltete Impulsdiskriminator 14 unterdrückt die durch Rauschen des Impulsverstärkers 13 oder des Photomultipliers 9 verursachten Fehlimpulse, die gegenüber den Nutzimpulsen eine geringere Pulshöhe aufweisen.

Durch diese erfindungsgemäße Schaltungsanordnung erhält man ein Wiedergabesystem für die Abtastung von Speicherleuchtstoffen, bei dem das Rauschen von Photodetektor und analogen Verstärkern sowie die Fehler des A/D-Wandlers vermieden werden. Die durch den Zähler erzeugten Digitalwerte sind unabhängig von der Kennlinie des Detektors und des Verstärkers. Es handelt sich hierbei um eine Absolutmessung, für die keine Eichung erforderlich ist.

**Patentansprüche**

1.  Röntgendiagnostikeinrichtung mit einem Röntgenkonverter mit Lumineszenz-Speicherleuchtschirm (4), der das jeweilige Röntgenstrahlenbild latent speichert, und mit einer Auslesevorrichtung (4 bis 17), die zur Bildwiedergabe den Speicherleuchtschirm (4) durch die ausgesandten Strahlen einer zusätzlichen Strahlenquelle (6) bildpunktweise zum Leuchten anregt, mit einem Detektor (9) zur Erfassung des von den Bildpunkten des Speicherleuchtschirmes (4) emittierten Lichtes, der eine Umwandlung des ausgelesenen, latent gespeicherten Strahlenbildes in elektrische Signale bewirkt, die auf einem Monitor (11) wiedergegeben werden, **dadurch gekennzeichnet,** daß der Detektor (9) ein Photomultiplier ist, der eine Impulsfolge erzeugt, deren Impulsrate von der auf die lichtempfindliche Eingangsfläche des Photomultipliers fallenden Helligkeit abhängt, und daß an dem Ausgang des Detektors (9) ein Zähler (15) für die Impulse angeschlossen ist, der bildpunktweise die Impulse des Detektors 9 zählt und über eine Wandlerstufe (16, 17), die eine Zusammensetzung der einzelnen Zählerwerte zu einem Bildsignal bewirkt, mit dem Monitor (11) verbunden ist.

2.  Röntgendiagnostikeinrichtung nach Anspruch 1, **dadurch gekennzeichnet,** daß der Detektor (9) ein Single-Photon-Photomultiplier ist, der für jedes auf seine lichtempfindliche Eingangsfläche fallende Photon einen Impuls erzeugt.

3. Röntgendiagnostikeinrichtung nach Anspruch 1 oder 2, **dadurch gekennzeichnet,** daß an dem Photomultiplier (9) ein Impulsverstärker (13) angeschlossen ist.

4. Röntgendiagnostikeinrichtung nach einem der Ansprüche 1 bis 3, **dadurch gekennzeichnet,** daß das Ausgangssignal des Photomultipliers (9) einem Impulsdiskriminator (14) zugeführt wird, dessen Ausgang mit dem Eingang des Zählers (15) verbunden ist.

## Claims

1. X-ray diagnostic device having an X-ray converter with luminescent storage phosphorescent screen (4), which stores the respective X-ray image in a latent manner, and having a read-out arrangement (4 to 17) which for the purpose of reproducing the image, by means of the emitted rays of an additional radiation source (6), excites the storage phosphorescent screen (4) to give light image dot by image dot, having a detector (9) for detecting the light emitted by the image dots of the storage phosphorescent screen (4), effecting a conversion of the ray image, which has been read out and stored in a latent manner, into electrical signals which are reproduced on a monitor (11), characterised in that the detector (9) is a photomultiplier which generates a pulse sequence, the pulse rate of which is dependent upon the luminosity falling onto the light-sensitive input surface of the photomultiplier, and in that a counter (15) for the pulses is connected to the output of the detector (9), which counter counts the pulses of the detector 9 image dot by image dot and is connected with the monitor (11) by way of a converter stage (16, 17) which compounds the individual counter values to form an image signal.

2. X-ray diagnostic device according to claim 1, characterised in that the detector (9) is a single-photon photo-multiplier which generates a pulse for each photon falling onto its light-sensitive input surface.

3. X-ray diagnostic device according to claim 1 or 2, characterised in that a pulse amplifier (13) is connected to the photo-multiplier (9).

4. X-ray diagnostic device according to one of the claims 1 to 3, characterised in that the output signal of the photo-multiplier (9) is supplied to a pulse discriminator (14), the output of which is connected to the input of the counter (15).

## Revendications

1. Appareil de radiodiagnostic comportant un convertisseur radiologique possédant un écran luminescent de mémorisation (4), qui mémorise à l'état latent l'image radiographique concernée, et un dispositif de lecture (4 à 17), qui, pour la reproduction d'une image, excite point par point d'image, l'écran luminescent de mémorisation (4), pour l'amener à luminescence, au moyen du rayonnement émis par source supplémentaire de rayonnement (6), un détecteur (9) pour détecter la lumière émise par les points image de l'écran luminescent de mémorisation (4), qui réalise une conversion de l'image de rayonnement lue, mémorisée à l'état latent, en des signaux électriques qui sont reproduits sur un moniteur (11), caractérisé par le fait que le détecteur (9) est un photomultiplicateur qui produit une suite d'impulsions: dont la fréquence dépend de la luminosité tombant sur la surface photosensible d'entrée du photomultiplicateur, et qu'à la sortie du détecteur (9) est raccordé un compteur (15) servant à compter les impulsions et qui compte pour chaque point d'image les impulsions du détecteur (9) et est raccordé au moniteur (11) par l'intermédiaire d'un étage convertisseur (16,17), qui réunit les différentes valeurs du compteur pour former un signal d'image.

2. Appareil de radiodiagnostic suivant la revendication 1, caractérisé par le fait que le détecteur (9) est un photomultiplicateur de photons isolés, qui produit une impulsion pour chaque photon rencontrant sa surface photosensible d'entrée.

3. Appareil de radiodiagnostic suivant la revendication 1 ou 2, caractérisé par le fait qu'un amplificateur d'impulsions (13) est raccordé au photomultiplicateur (9).

4. Appareil de radiodiagnostic suivant l'une des revendications 1 à 3, caractérisé par le fait que le signal de sortie du photomultiplicateur (9) est envoyé à un discriminateur d'impulsions (14) dont la sortie est raccordée à l'entrée du compteur (15).

FIG 1

FIG 2

FIG 3